# EUROPEAN PATENT APPLICATION

(11) **EP 4 509 435 A1**
(43) Date of publication of application: **19.02.2025**
(21) Application number: 23191783.2
(22) Date of filing: 16.08.2023
(51) Int. Cl.: B65G 1/04, F25D 25/04

(54) **WAREHOUSE STORAGE MODULE AND SYSTEM HAVING A TEMPERATURE ZONE IN A STORAGE AREA FOR A PLURALITY OF STORAGE BINS**

(71) Applicant: VOLUME Lagersysteme GmbH, 01067 Dresden (DE)
(72) Inventor: Voloskov, Mikhail, 01067 Dresden (DE); Preußer, Martin, 01067 Dresden (DE)
(74) Representative: Laqua, Bernd Christian Kurt

(57) **Abstract**

The present disclosure relates to warehouse storage module (200) comprising a storage area adapted to accommodate a plurality of stacks of storage bins (202) arranged in a horizontal two-dimensional grid at a bottom of the storage module (200). A top level (206) is arranged above the storage area (204) and configured to accommodate at least one vehicle (210) movable in alignment with the two-dimensional grid to retrieve and place storage bins (202) from and to the plurality of stacks (208). The storage module comprises outer walls (500) enclosing at least partially the storage area (204) and forming a temperature zone that is delimited from the exterior (502). An opening is formed to enable retrieval and placement of storage bins (202) from and to the plurality of stacks by the at least one vehicle (210), and a thermal barrier (620) is formed configured to thermally close the opening.

## Description

### Technical Field

The present disclosure generally relates to the field of warehouse storage modules and warehouse systems. More particularly, the present disclosure relates to a warehouse storage module providing space for a three-dimensional arrangement of storage bins and a warehouse system having such storage modules with an improved temperature zone.

### Background

In the industry, warehouses are used to store large amounts of goods in an organized manner. Warehouse systems typically employed nowadays encompass a variety of types of storage systems ranging from simple storage racks, allowing the storage of totes in horizontal rows with multiple levels where shuttle vehicles or small load stacker cranes are employed to retrieve totes from the racks, to compact warehouse systems that rather focus on the efficient use of available space in a warehouse.

Automated warehouse systems, such as the one disclosed in WO 2014/075937 A1, are one example of compact warehouse systems, which may comprise a grid structure of storage cells, wherein each storage cell is arranged to accommodate a vertical stack of storage bins. At a top level of the grid structure, one or more robots (or, more generally, "vehicles") may move horizontally to receive and place storage bins from and to the stacks of the storage cells, i.e., by raising storage bins from the stacks to the top level or lowering storage bins from the top level down onto the stacks, respectively. A bin lift or a similar device of the grid structure may receive a storage bin from a robot at the top level and convey the storage bin in a vertical direction down to a handover station. Such warehouse systems are offered by AutoStore (http://www.autostoresystem.com), for example.

While such systems may efficiently use the available space of a warehouse, they suffer from problems when the storage bins have to be stored at a particular temperature, e.g., if the storage bins (i.e., the goods and content of the storage bins) have to be cooled. This requires create temperature zones in a storage system and at the same time allowing the robot to freely move at the top level of the grid structure.

This, however, often requires cooling of the entire warehouse system.

### Summary

It is therefore an object of the present disclosure to provide a warehouse storage module and a warehouse system that enable a more energy efficient storage of goods.

In the present disclosure, reference is made to cooling a particular space for storage bins, i.e., a cooled space or cooled temperature zone. It is to be understood that a temperature zone may likewise be a space that has an increased (heated) temperature compared to the exterior. Nevertheless, the majority of storage spaces having a different storage temperature than the exterior will rather require cooling than heating, so that the present disclosure focuses on cooling, but is not limited thereto.

According to a first aspect, a warehouse storage module comprises a storage area adapted to accommodate a plurality of stacks of storage bins arranged in a horizontal two-dimensional grid at a bottom of the storage module, and a top level arranged above the storage area and configured to accommodate at least one vehicle movable in alignment with the two-dimensional grid to retrieve and place storage bins from and to the plurality of stacks. Thus, a three-dimensional space is provided in the storage area for storing a plurality of storage bins, wherein, on top of this three-dimensional storage space, there is a vehicle movable in the top level to reach each stack of storage bins.

Furthermore, the warehouse storage module comprises outer walls enclosing at least partially the storage area and forming a temperature zone that is delimited from the exterior. As a mere example, the outer walls can be of a thermally insulating material that delimits the storage area thermally from the exterior, so that the temperature zone is closed from the exterior. For instance, the outer walls can be made from an insulating canvas or membrane or tarpaulin.

The warehouse storage module further comprises an opening to enable retrieval and placement of storage bins from and to the plurality of stacks by the at least one vehicle, and a thermal barrier configured to thermally close the opening. In other words, the storage area can be reached from the exterior through the opening. Thus, instead of, for example, cooling an entire building, in which a warehouse system is installed, the warehouse storage module allows provision of a temperature zone, such as a cooled zone or cooled three-dimensional space having e.g. substantially the size of the warehouse storage module. This reduces energy consumption, as the space to be cooled is smaller, particularly the space to be cooled is narrowed to the space of storage.

In an implementation variant, the outer walls can comprise an outer ceiling arranged horizontally above the top level, wherein the temperature zone includes the top level. Thus, the entire space defined by the warehouse storage module can be thermally insulated by the outer walls and the outer ceiling. While it is possible to cool the storage area even without a ceiling, as cold air sinks to the bottom of the storage module, the ceiling additionally encloses the space to be cooled, which further decreases energy consumption for cooling. It is to be understood that in case of heating the temperature zone, the outer ceiling keeps the warm air inside of the temperature zone.

In another implementation variant, the opening can be provided in a vertical outer wall at an edge of the storage module (particularly an edge of the storage area or the top level), where the at least one vehicle reaches a handover point of the warehouse storage module, the handover point being located outside of the storage area. Thus, while a temperature zone can be formed inside of the outer walls and outer ceiling, the vehicle is capable of moving storage bins in and out of the storage module. The thermal barrier provides thermally insulating the space inside of the storage module, even at the location of the opening.

In a further implementation variant, the thermal barrier can comprise at least one air curtain arranged along an edge of the opening and configured to generate an air curtain thermally closing the opening. Such air curtain, also referred to as an air door, is separating two spaces conditioned at different temperatures from one another. The air curtain provides a continuous stream of air across the opening, which hinders air from leaving the temperature zone to the exterior and air from the exterior to enter the temperature zone. Such air curtain is an inexpensive way of thermally closing the opening, and at the same time, allows storage bins to move through the opening, for example, by the vehicle.

In yet a further implementation variant, the thermal barrier can comprise a door configured to selectively open and close the opening. Such door can be any kind of door movable between an open position and a closed position. Exemplary doors can pivot or move in a horizontal or vertical direction, such as a roller shutter, between the open and closed positions.

As a mere example, the at least one door can be a high-speed door, also referred to as rapid action door, which can be moved between the open position and the closed position at a relatively high speed, such as approximately 200 to 800 mm/s, preferably approximately 500 mm/s. It is to be understood that the actually implemented speed of the door does not limit the present disclosure.

The door allows closing the opening during regular operation of the warehouse storage module. Only if a storage bin is to be transported through the opening, the door moves into the open position in a fast manner, and when the storage bin and/or the vehicle is not in the opening (anymore), the door moves back into the closed position. Thus, an exchange of thermal energy between the exterior and the temperature zone (e.g., the storage area) is minimised.

As a mere example, the door can be implemented together with an air curtain. This allows operating the air curtain only if the (high-speed) door is in the open position, in order to minimise thermal exchange between the exterior and the temperature zone.

In another implementation variant, the thermal barrier comprises at least one door configured to run approximately horizontally between the storage area and the top level to selectively cover and uncover the storage area. The at least one door can also be considered as a horizontal shutter. Running approximately horizontally is to be understood as a door movement that is substantially in a horizontal plane. This plane depends on the position of the top of the storage area and/or the bottom of the top level, where the vehicle drives. Such plane is not limited to an exactly horizontal plane, but can deviate from a horizontal plane by +/- 10°.

The at least one door can be arranged below a structure for the at least one vehicle to move on. This allows closing the storage area by the at least one door and maintaining a thermally insulated temperature zone. The opening of the warehouse storage module is then to be contemplated as anywhere at the top of the storage area, depending on the opening degree of the at least one door. Thus, if the door (or all of the at least one door) opens entirely, the entire footprint of the storage area at the top of the storage area forms the opening.

Such arrangement allows moving the vehicle in an environment independent of the temperature zone, such as a non-cooled area. Thus, a vehicle can be employed that is not specifically designed for conditioned temperature zones. Likewise, any heat energy generated by the at least one vehicle is not released into the temperature zone (i.e., the storage area).

Furthermore, in case the temperature zone is a cooled area, since cool air sinks to the bottom of the storage area, opening the door does not release cold air to the exterior. At the same time, the vehicle can reach the storage bins from above, without significant disturbance of the conditioned air in the storage area.

As a mere example, the at least one door can be a high-speed door, also referred to as rapid action door, which can be moved horizontally between the open position and the closed position at a relatively high speed, such as approximately 200 to 800 mm/s, preferably approximately 500 mm/s. It is to be understood that the actually implemented speed of the door does not limit the present disclosure.

In a further implementation variant, the at least one door can have a width corresponding to a first size of one or more of the plurality of stacks of storage bins. The width of the door is a size of the door in a direction perpendicular to a moving direction of the door. When the door moves to an open position, the resulting opening has a width corresponding to the first size of the associated stack or stacks of storage bins, i.e., the size or pitch of one or more cells of the two-dimensional grid at the bottom of the storage module. In other words, opening the door allows creating an opening in an area at the top of the storage area sufficiently large to reach the one or more stacks below.

In a particular example, the at least one door can have a width corresponding to a first size of the entire storage area, the first size being measured along one direction of the two-dimensional grid at the bottom of the storage module. In other words, the at least one door covers an area at the top of the storage area spanning over all stacks of the storage bin in a direction of the first size. Thus, opening the door allows creating an opening sufficiently large to reach all stacks along one direction of the two-dimensional grid at the bottom of the storage module.

In yet a further implementation variant, the at least one door can have an operating length corresponding to a second size of one or more of the plurality of stacks of storage bins. The operating length is a size of the door in a direction parallel to the moving direction of the door. Furthermore, the operating length also means a length of an opening created when the at least one door moves into an open position.

Thus, moving the door into an opening position means exposing at least one stack in a direction of the second size, the second size being measured along one direction of the two-dimensional grid at the bottom of the storage module. The second size may be measured perpendicularly to the first size. As a mere example, the at least one door can have multiple opening positions, such as according to the number of cells of the two-dimensional grid at the bottom of the storage module. Thus, moving the at least one door to one of these multiple opening positions means achieving an opening degree according to the grid structure of the storage module.

In a particular example, the at least one door has an operating length corresponding to the second size of the storage area. Thus, in a closed position, the at least one door closes all stacks of the storage area along the direction of the second size, and in an open position, the at least one door allows access to all stacks along the direction of the second size.

The direction in which the first size is measured can be a longitudinal direction of the storage module, while the direction in which the second size is measured can be a transverse direction of the storage module, or vice versa.

The number of doors can be arbitrarily chosen. Thus, in a widthwise direction, there can be one door per line of stacks, i.e., per grid cell, and, on the other hand, there can be a single door over all lines of stacks, i.e., all grid cells. Likewise, there can be one door for multiple lines of stacks, or any combination of doors of different widths. Likewise, the opening degree of each of the one or more doors can be chosen arbitrarily.

In another implementation variant, the at least one door can comprise a horizontal frame including a rail guiding the door. As a mere example, the at least one door can be rolled and unrolled, while a free end of the at least one door moves along the rail between its open and closed positions.

Alternatively or additionally, the at least one door can comprise a vertical frame including a rail guiding the door. This, for example, allows employing a flexible door that can be bent by at least 90° in a corner formed by the horizontal and vertical frames, so that a first portion is arranged in the horizontal frame covering the opening and a second portion can be arranged in the vertical frame.

The rail guiding the door can be integrated into and/or can form the horizontal and/or vertical frame. Thus, the rail can be a component separate to the frame or can be a single component with the frame or being the frame.

In an implementation variant, the horizontal frame and/or the vertical frame can be mounted to a structure forming the storage area and/or the top level. As a mere example, the horizontal frame and/or the vertical frame can be mounted in a space efficient manner to a structure of the storage module. It is to be understood that the horizontal frame and/or the vertical frame may likewise be integrated into a structure forming the storage area and/or the top level.

In a further implementation variant, the at least one door can comprise a rope or belt, and one or more pulleys configured to turn the rope or belt and/or a motor driving the rope or belt. The rope or belt can be mounted to a free end of the door, so that moving the rope or belt along the opening and closing direction of the door allows moving the door between the open position and the closed position. The motor driving the rope or belt can be arranged, for example, in a corner between the horizontal frame and the vertical frame. Alternatively, the motor can be arranged anywhere along the horizontal frame or the vertical frame, such as at an end of the horizontal frame or the vertical frame.

Alternatively, the motor can drive a roller rolling and unrolling the door.

Likewise, the motor can drive a roller, gear, drive axle or drive wheel that is coupled or engages a portion of the door, so that rotating the roller, gear, drive axle or drive wheel moves the door between the open or closed position. As a mere example, the roller, gear, drive axle or drive wheel can be provided at a corner of the horizontal frame and the vertical frame and the door is bent around the roller, gear, drive axle or drive wheel, so that driving the roller, gear, drive axle or drive wheel moves the door from the horizontal frame towards the vertical frame and back. This allows an easy installation of an actuator for the door.

In another implementation variant, the motor can be configured to drive one or more of the at least one door. In other words, a single motor can be provided that drives one door or a plurality of doors.

As a mere example, each door can be provided with a drive coupling (or clutch) that is configured to selectively couple and decouple the motor from a respective drive axle or drive wheel of the one or more doors. This allows controlling the motor and the drive coupling (or clutch) to move one door or a plurality of doors at the same time period by coupling and decoupling one or more of the respective drive couplings (or clutches) any number of doors can be moved, even if such doors are not arranged directly adjacent to one another.

Furthermore, also as a mere example, a plurality of doors can be provided with respective drive axles or drive wheels, one or more of which can be formed by a hollow shaft through which a shaft coupled with the motor extends. By arranging the drive coupling between the motor or shaft and the hollow shaft, each of the plurality of doors can be moved individually.

In yet a further implementation variant, the thermal barrier can comprise at least one further door configured to run approximately horizontally between the storage area and the top level to selectively cover and uncover the storage area, wherein the at least one further door is arranged opposite to the at least one door and is configured to close the opening in coaction with one of the at least one door. In other words, the door and the further door can contact one another at their respective free ends. By moving each of the doors, the respective free ends can be brought to any location above the storage area. As a mere example, the free ends of the door and the further door can be brought to a location corresponding to the two-dimensional grid, i.e., a border of a grid cell or grid space. This further allows moving the free ends of the doors apart from one another, in order to create the opening therebetween, and, on the other hand, bringing the free ends of the doors into contact with one another, in order to close the opening. This may include moving one or both of the doors to create the opening and moving the other one or both of the doors to close the opening.

In another implementation variant, the warehouse storage module can further comprise a ground surface, optionally in the form of a rod assembly aligning with the two-dimensional grid, based on which the plurality of stacks of storage bins are placeable.

According to a second aspect of the present disclosure, a warehouse system comprising a plurality of storage modules of the first aspect or one of its variants, examples or alternatives. The warehouse system may be located in an individual room. The plurality of storage modules is interconnected with one another and arranged in at least two levels. Thus, the warehouse system can be formed by connecting two or more storage modules. This allows sizing the warehouse system in any desired dimension and any desired number of storage bins to be stored therein.

In an implementation variant, the outer walls of at least a portion of the plurality of interconnected storage modules form a zone of contiguous storage areas that is closed from the exterior. In other words, the storage areas of more than one storage module together form a single temperature zone. As a mere example, two adjacent storage modules are not provided with an outer wall at their contacting sides, so that a continuous storage area is formed. The same is possible for two storage modules arranged on top of one another, wherein the lower storage module may not comprise an outer ceiling and/or a door at the top of its storage area, while the upper storage module may include an outer ceiling and/or a door at the top of its storage area. The lower storage module, however, can be provided with a thermal barrier at its opening in the outer wall.

In another implementation variant, the outer walls of the plurality of interconnected storage modules can be provided to form a plurality of zones of contiguous storage areas in the warehouse system, wherein each zone is closed from the exterior and other zones of contiguous storage areas, wherein each of the plurality of zones forms a different temperature zone.

Thus, by employing outer walls and/or outer ceilings, one or more zones of same or different temperature can be achieved. This provides great flexibility of the warehouse system.

It is to be understood that the outer walls and/or outer ceilings can be installed or removed, in case of a desire to redesign the one or more temperature zones.

In a further implementation variant, for each of the plurality of storage modules, a height of the storage module is dimensioned to allow a maximum number of 6, preferably 5, 4 or 3, storage bins per stack of the plurality of stacks of the storage module.

In yet a further implementation variant, the plurality of storage modules comprises at least 3, preferably at least 4 or at least 5, levels of storage modules placed one above the other in the individual room.

In another implementation variant, the plurality of interconnected storage modules can further (optionally) comprise at least two storage modules placed one next to the other in a horizontal direction in the individual room.

Thus, any individual design of the warehouse system can be achieved by interconnecting a corresponding number of storage modules in any desired direction(s).

In yet another implementation variant, each of the plurality of storage modules is dimensioned to accommodate a maximum of 500, preferably 400, 300, 200 or 100, storage bins in the plurality of stacks of the storage module.

In a further implementation variant, each of the plurality of storage modules can be a prefabricated interconnectable storage module, wherein the warehouse system is assembled from the plurality of storage modules in the manner of a modular construction system.

As a mere example, among the plurality of interconnected storage modules, two storage modules placed one above the other may be interconnected using a mechanical form fit established between a bottom of the upper storage module and a top of the lower storage module of the two storage modules. Each of the plurality of storage modules may be dimensioned to have a maximum extension in a longitudinal direction of 4, preferably 3 or 2, meters.

In order to retrieve a storage bin from one of the plurality of stacks of the plurality of storage modules, at least one vehicle may, once the vehicle has retrieved the storage bin from the stack, be moved together with the storage bin along the top level of the respective storage module towards an edge of the storage module, where the vehicle may shift the storage bin beyond the edge of the storage module and lower the storage bin along the edge of the storage module to a handover point of the warehouse system.

According to a third aspect of the present disclosure, a modular construction method for assembling a warehouse system is provided, wherein the warehouse system provides space for a three-dimensional arrangement of storage bins. The method comprises assembling the warehouse system from a plurality of prefabricated interconnectable storage modules, such as the storage module of the first aspect or one of its variants. Assembling the warehouse system from the plurality of prefabricated interconnectable storage modules includes forming at least two levels of storage modules by placing one storage module above another in an individual room. Furthermore, a thermal barrier is installed at an opening of at least one of the storage modules, which opening enables retrieval and placement of storage bins from and to the plurality of stacks of the at least one of the storage modules by the at least one vehicle.

### Brief Description of the Drawings

In the following, aspects of the present disclosure will be described in more detail, also with reference to the accompanying drawings, in which:
- Figure 1: illustrates a perspective view of an interconnectable storage module with a three-dimensional arrangement of storage bins;
- Figure 2: provides an illustration of an exemplary step of a modular construction method in which two storage modules are placed one above the other;
- Figure 3: illustrates a perspective view of a warehouse system comprising a plurality of interconnected storage modules;
- Figure 4: illustrates perspective views of a storage module forming a temperature zone in two different situations of a vehicle moving storage bins;
- Figure 5: illustrates views of a storage module with an opening in a vertical outer wall and details of the opening;
- Figure 6: illustrates a perspective view of a warehouse system comprising a plurality of interconnected storage modules forming different temperature zones;
- Figure 7: illustrates perspective views of an exemplary thermal barrier in different opening degrees;
- Figure 8: illustrates details of the thermal barrier of Figure 7;
- Figure 9: illustrates a cut out of a perspective view of a storage module with multiple thermal barriers of Figure 7;
- Figure 10: illustrates a perspective view of another exemplary thermal barrier; and
- Figure 11: illustrates a cut out of a perspective view of a storage module with a thermal barrier of Figure 10.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

According to a first aspect, a warehouse storage module comprises a storage area adapted to accommodate a plurality of stacks of storage bins arranged in a horizontal two-dimensional grid at a bottom of the storage module, and a top level arranged above the storage area and configured to accommodate at least one vehicle movable in alignment with the two-dimensional grid to retrieve and place storage bins from and to the plurality of stacks. The warehouse storage module comprises outer walls enclosing at least partially the storage area and forming a temperature zone that is closed from the exterior. The warehouse storage module further comprises an opening to enable retrieval and placement of storage bins from and to the plurality of stacks by the at least one vehicle, and a thermal barrier configured to thermally close the opening.

A storage module may generally be designed in accordance with the grid structure, i.e., it may comprise a grid structure of storage cells, wherein each storage cell may be adapted to accommodate a vertical stack of storage bins. At the bottom of the storage module, the storage cells may be arranged in accordance with a horizontal two-dimensional grid, thereby enabling - together with the vertical stacks of storage bins placeable in the storage cells - a three-dimensional (or "cube-like") arrangement of storage bins. In other words, each cell of the two-dimensional grid at the bottom of the storage module may form a base for a vertical stack of storage bins in the corresponding storage cell. Altogether, the storage cells (including their vertical extension accommodating the stacks) may form the storage area of the storage module.

Above the storage area, a top level of the storage module may be provided, at which at least one vehicle (or "robot") may be movable in alignment with the two-dimensional grid at the bottom of the storage module to retrieve and place storage bins from and to the plurality of stacks, e.g., by raising an uppermost storage bin from a stack to the top level ("retrieving a storage bin from a stack") or by lowering a storage bin from the top level down onto the stack ("placing a storage bin to the stack"). Placing a storage bin onto the stack may comprise placing the storage bin onto a topmost storage bin of the stack (if the stack is currently non-empty) or placing the storage bin onto a ground surface at the bottom of the storage module reserved for the stack (if the stack is currently empty), i.e., a cell of the two-dimensional grid at the bottom of the storage module forming the base for the stack.

To this end, each vehicle may comprise a lifting mechanism enabling the vehicle to carry out corresponding raising/lowering procedures.

The top level of the storage module may comprise a grid structure that allows the vehicles to move in alignment with the two-dimensional grid at the bottom of the storage module, so that a vehicle may be moved to a position above a stack in order to retrieve or place a storage bin from/to the stack accordingly. The grid structure at the top level may be formed of a two-dimensional grid of rails, for example, in which rollers of the vehicles may engage, in order for the vehicles to be movable horizontally in the longitudinal direction and/or in the transverse direction along the top level of the storage module.

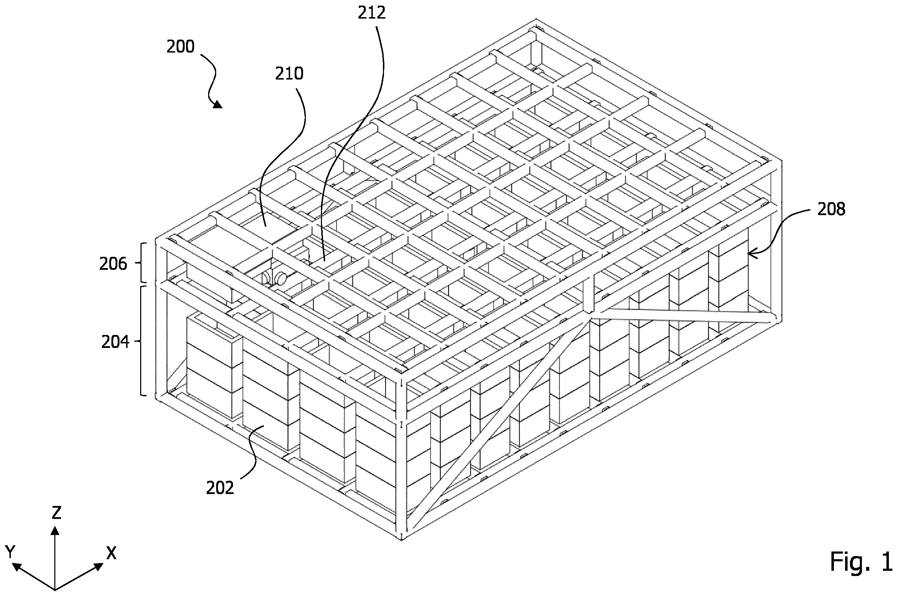

An exemplary illustration of an individual storage module according to the present disclosure is shown in Figure 1. As can be seen, the exemplary warehouse storage module 200 provides space for a three-dimensional arrangement of storage bins 202, wherein the storage module 200 comprises a storage area 204 and a top level 206 arranged above the storage area 204. In the storage area 204, vertical stacks 208 of storage bins 202 are arranged in a horizontal two-dimensional grid at the bottom of the storage module 200. In other words, the two-dimensional grid may extend in a longitudinal direction X and in a transverse direction Y at the bottom of the storage module 200, wherein, at each cell of the two-dimensional grid, a base for a stack 208 that may grow in the vertical direction Z may be formed. Each such space comprising the base for a stack 208 including the vertical space above the base for accommodating the bins 202 of the stack may be called a "storage cell", as referred to herein. At the top level 206, a vehicle 210 is shown which is movable (horizontally at the top level) in alignment with the two-dimensional grid above the respective stacks 208 to retrieve and place storage bins 202 from and to the plurality of stacks 208. A two-dimensional grid of rails 212, in which rollers of the vehicle 210 may engage, may form the bottom of the top level 206 which separates the top level 206 from the storage area 204.

According to a second aspect of the present disclosure, there is provided a warehouse system providing space for a three-dimensional arrangement of storage bins, wherein the warehouse system comprises a plurality of interconnected storage modules. Each storage module comprises a storage area and a top level arranged above the storage area, wherein the storage area is adapted to accommodate a plurality of stacks of storage bins arranged in a horizontal two-dimensional grid at a bottom of the storage module, wherein, at the top level, at least one vehicle is movable in alignment with the two-dimensional grid to retrieve and place storage bins from and to the plurality of stacks. The plurality of interconnected storage modules comprises at least two levels of storage modules placed one above the other in an individual room.

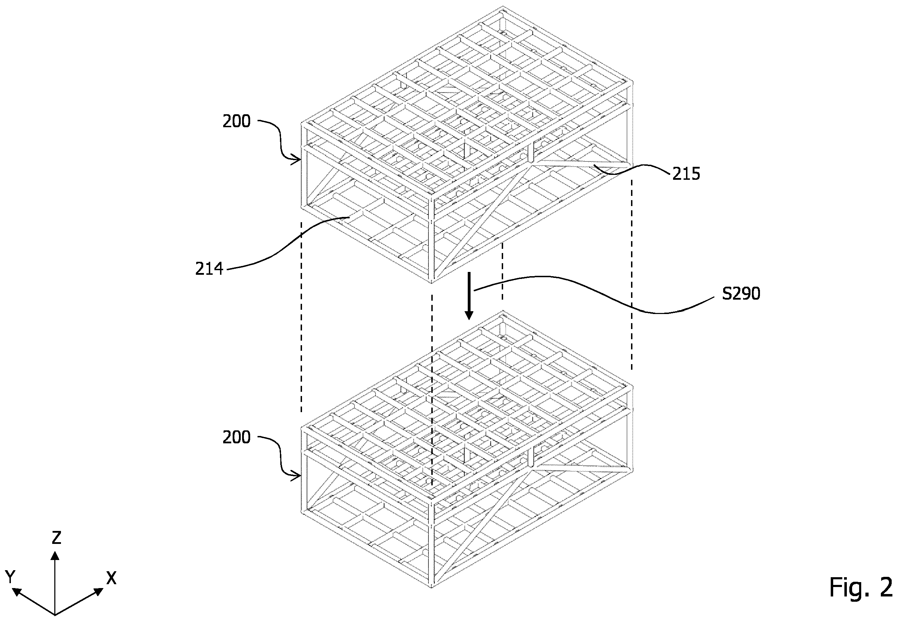

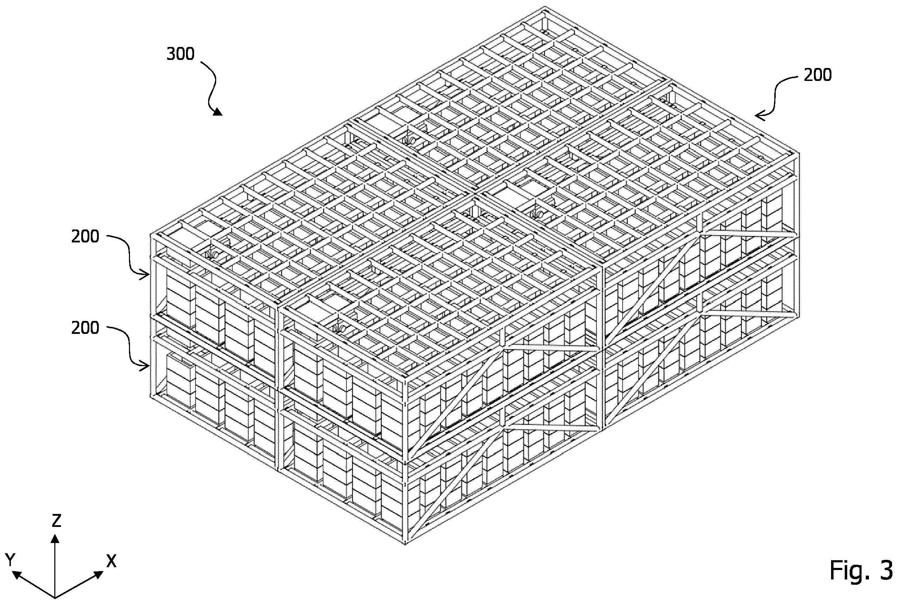

An exemplary illustration of a corresponding modular construction method is shown in Figure 2. As shown in the figure, the method comprises an exemplary assembling step S290 by which two prefabricated interconnectable storage modules are placed one above the other in order to form a warehouse system having at least two levels of storage modules, as generally described herein. As in the previous examples, each of the storage modules may have an identical construction, i.e., as described above with reference to the storage module 200 shown in Figure 1 (although, in Figure 2, the storage modules are shown in an empty state without storage bins at the time of construction). Placing the two prefabricated interconnectable storage modules 200 one above the other may include "stacking" them in a "bottle crate manner", and optionally connecting them using appropriate fixation means. It will be understood that similar steps may be performed in order to "line up" storage modules in at least one horizontal direction, i.e., place two prefabricated interconnectable storage modules next to one another (e.g., in the longitudinal direction X and/or in the transverse direction Y) to yield a warehouse system 300 having at least two storage modules placed next to each other in at least one horizontal direction, as described herein and as exemplarily shown in Figure 3.

Thus, rather than providing separate portions of a warehouse system at different rooms (or floors) of a building, the warehouse system 300 of the present disclosure may be made up of a plurality of interconnected storage modules 200 placed one above the other and/or next to one another in the same room (i.e., disposed directly one above the other, without separation by a continuous floor of another entity, i.e., a floor not being formed by the storage modules of the warehouse system itself, such as the floor of a building), which implies smaller heights of the individual storage modules and, consequently, smaller stack sizes to be handled by the vehicles, thereby enabling higher throughput for the warehouse system as a whole. In some variants, for each of the plurality of storage modules, a height of the storage module may be dimensioned to allow a maximum number of 6, preferably 5, 4 or 3, storage bins per stack of the plurality of stacks of the storage module. Typical room heights in which the warehouse system of the present disclosure may be installed may comprise a maximum height of 5, preferably 4, 3 or 2.5 meters, for example. As said, the room may be a room of a building or a room of a container, i.e., a room that may be closable from the exterior. It will be understood that the formulation "in an individual room" as generally used herein to characterize the warehouse system 300 according to the present disclosure may have the meaning of "on a floor" or "on an individual floor" (of a building or container), for example. It will also be understood that the present disclosure may comprise a building or container in which the warehouse system of the present disclosure is installed.

It will be understood that the plurality of interconnected storage modules may not only form two levels of storage modules placed one above the other, but may comprise at least 3, preferably at least 4 or at least 5, levels of storage modules placed one above the other in the individual room. Each such number of levels may be applied for a given room height, e.g., for each of the exemplary maximum room heights mentioned above.

As mentioned above for the number of vertical levels, the plurality of interconnected storage modules may likewise comprise at least 3, preferably at least 4 or at least 5, storage modules placed next to one another in the longitudinal direction and/or the transverse direction. It will be understood that, by placing storage modules next to each other in such manner, larger base areas of the warehouse system may be realized, wherein the shape of the base area may be varied dependent on how many storage modules are lined up in the longitudinal direction and how many storage modules are lined up in the transverse direction.

In specific variants, the warehouse system 300 may comprise interconnected storage modules 200 lined up in all three dimensions of the warehouse system, i.e., in the vertical direction Z, the longitudinal direction X and the transverse direction Y. In such variants, the plurality of interconnected storage modules 200 may comprise at least two storage modules placed one above the other in the vertical direction, at least two storage modules placed one next to the other in the longitudinal direction, and at least two storage modules placed one next to the other in the transverse direction in the individual room. In this case, the warehouse system may also be said to form a cube made up by the plurality of interconnected storage modules.

At at least one (e.g., all) of the vertical levels of the warehouse system 300 described herein, the "top levels" 206 of the interconnected storage modules 200 on the same vertical level may be interconnected such that vehicles 210 are allowed to horizontally move from the top level 206 of one storage module 200 to the top level 206 of an adjacent storage module 200 (i.e., in the longitudinal and/or transverse direction). When the plurality of interconnected storage modules 200 comprises at least two storage modules placed one next to the other, and when the top level of the at least two storage modules 200 are formed of a two-dimensional grid of rails 212 in which rollers of the vehicles may engage in order for the vehicles 210 to be movable horizontally in the longitudinal direction and/or in the transverse direction along the top level 206, as described above, the rails 212 of two adjacent interconnected storage modules 200 may thus be arranged such that vehicles 210 are allowed to move from the top level 206 of one of the adjacent interconnected storage modules 200 to the top level 206 of the other one of the adjacent interconnected storage modules 200, to thereby allow continuous horizontal movement of the vehicles 210 between adjacent interconnected storage modules 200.

Therefore, while, in the exemplary warehouse system 300 shown in Figure 3, individual vehicles 210 are exemplarily shown/provided for each separate storage module 200 (e.g., each such vehicle 210 may, in some variants, only be movable within the top level 206 of its associated storage module 200, but not move over to an adjacent storage module 200), it will be understood that, in other variants, the warehouse system may be constructed such that one or more vehicles 210 may horizontally move between the "top levels" 206 of adjacent storage modules 200. Thus, in the exemplary warehouse system 300, it may also be conceivable that one or more vehicles 210 are provided per vertical level of the warehouse system 300 and are horizontally movable to reach all stacks provided at that vertical level of the warehouse system 300.

As an example, in order to achieve transportability, each of the plurality of storage modules 200 may be dimensioned to have a maximum extension in a longitudinal direction of 4, preferably 3 or 2, meters. As another exemplary dimensional measure, it may be said that each of the plurality of storage modules may be dimensioned to accommodate a maximum of 500, preferably 400, 300, 200 or 100, storage bins 202 in the plurality of stacks of the storage module. As typical dimensions of storage bins 202 to be placed in a warehouse system 300, such as the one according to the present disclosure, may be in the ranges of length: 300mm-600mm, width: 200mm-400mm, and height: 145mm-310mm, a maximum of 500, preferably 400, 300, 200 or 100, storage bins accommodated in the stacks of an individual storage module implies a comparably "small dimension" of the storage modules. Especially, a "flat design" of the storage modules may be implied when some of the above-mentioned dimensional parameters are combined, e.g., when the maximum extension of the storage modules in a longitudinal direction of 4, preferably 3 or 2, meters is combined with a maximum allowed number of 6, preferably 5, 4 or 3, storage bins per stack. Beyond the provision of quicker access times and increased throughput as well as a generally more flexible construction of the warehouse system 300, as described above, the modular constructibility using "smaller" and "flatter" modules 200 may also allow fast on-site installation times. Especially in smaller setups (e.g., if the warehouse system is to be installed in comparably small rooms, rather than in huge industrial halls), this may enable a compact design of the warehouse system, while enabling to install the warehouse system 300 just like in a "plug-and-play" manner with minimal effort. Typical dimensions for a storage module 200 of this type, such as the one shown in Figure 1, may comprise a length of approx. 2.5 m in the longitudinal direction X, approx. 1.5 m in the transverse direction Y, and approx. 1 m in the vertical direction Z, allowing - given bin dimensions of length: 300mm, width: 200mm, and height: 145mm - a maximum number of 4 bins per stack, with 9 stacks placeable next to each other in the longitudinal direction X and 4 stacks placeable next to each other in the transverse direction Y, as shown in Figure 1.

With regard to the dimensional parameter values outlined in the above description (i.e., (1) the maximum allowed number of storage bins 202 per stack being 6, preferably 5, 4 or 3, (2) the maximum room heights in which the warehouse system 300 of the present disclosure may be installed being 5, preferably 4, 3 or 2.5 meters, (3) the number of levels of storage modules 200 placed one above the other in the room of the building being at least 2, preferably at least 3, at least 4 or at least 5, (4) the number of storage modules 200 placed next to one another in the room of the building in the longitudinal direction X and/or in the transverse direction Y being at least 2, preferably at least 3, at least 4 or at least 5, (5) the maximum extension of a storage module in a longitudinal direction being 4, preferably 3 or 2, meters, (6) the maximum number of storage bins accommodated in the stacks of a storage module being 500, preferably 400, 300, 200 or 100, and (7) the length, width and height ranges of storage bins 202 being length: 300mm-600mm, width: 200mm-400mm and height: 145mm-310mm), all possible combinations of these parameter values (although not explicitly listed herein) shall be considered to be explicitly disclosed in the present disclosure.

An exemplary rod assembly by which the grid structure of a storage module 200 may be made up is shown in Figure 2. As can be seen from Figure 2, the rod assembly comprises outer rods forming a cubic frame of the storage module 200 (comprising outer rods in the vertical, longitudinal and transverse directions). The bottom of the storage module 200 is formed of a rod assembly forming a two-dimensional grid 214, wherein each cell of the two-dimensional grid 214 provides a base on which the storage bins (see reference numeral 202 in Figure 1) may be placed to form vertical stacks of storage bins. Above and in alignment with the two-dimensional grid 214, another two-dimensional grid is provided, which separates the top level from the storage area of the storage module (see reference numerals 206 and 204 in Figure 1), which, as described with reference to Figure 1, may be provided in the form of a grid of rails 212, in which rollers of vehicles moving at the top level may engage. Figure 2 also shows that further rods may be provided in the rod assembly, such as diagonal struts strengthening the cubic frame on one or more sides of the storage module, as appropriate.

As a further constructional characteristic of the warehouse system according to the present disclosure, at least a portion of the plurality of interconnected storage modules may be provided with outer walls so as to form a zone of contiguous storage areas that is closed from the exterior. In case of adjacent storage modules, such outer wall may be provided in the form of a partitioning wall provided at the adjoining surface between the adjacent storage modules. Zones may be provided in this manner to subdivide the warehouse system into different zones each fulfilling different storage conditions, such as different storage temperatures required for goods stored in the corresponding storage bins. Outer walls may also be provided to form a plurality of zones of contiguous storage areas in the warehouse system, wherein each zone may be closed from the exterior and other zones of contiguous storage areas. Each of the plurality of such zones may form a different temperature zone. As a mere example, different zones may be established to provide at least one of a temperature zone having room temperature, a temperature zone having cooled temperature, and a temperature zone having deep-freeze temperature (the latter possibly being relevant for the storage of products of the food industry, for example). Two or more of such different zones may be isolated differently (e.g., isolating each zone with different thickness of insulation material) and, also, each zone may be provided with a separate cooling system, for example.

The outer walls may be installed detachably, so that zones of contiguous storage areas may be changed as necessary over time. In particular, the outer walls may be installed in a manner that does not increase the outer dimensions of the storage modules, e.g., by installing the walls within a frame (optionally, including available struts in the frame, such as struts 215 shown in Figure 2) forming the outer side of the storage module. Furthermore, in at least one of the outer walls forming a zone, an opening may be provided to enable retrieval and storage of storage bins from and to the storage modules of the zone, e.g., so that vehicles at the "top level" of a corresponding storage module may deliver and receive storage bins through the opening to and from the exterior.

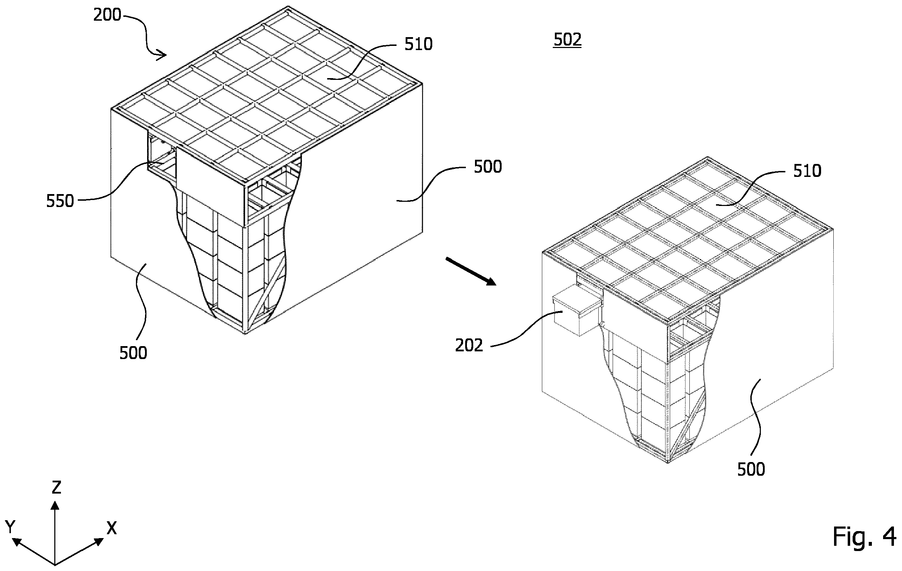

An exemplary illustration of a storage module having outer walls to form a zone in the above sense is shown in Figure 4. In the shown example, a special case is shown in which a zone is formed by a single storage module 200, i.e., outer walls 500 may be provided on each side of the single storage module 200 so as to form a contiguous storage area that is closed from the exterior 502. The outer walls 500 are illustrated as partially cut open, in order to illustrate parts of the interior of the storage module 200. It is to be understood that the outer walls 500 are continuous over the entire side of the storage module 200.

As shown, an exemplary opening 550 is provided in one outer wall 500 at the vertical level of the "top level" of the storage module 200 in order to allow a vehicle moving at the top level of the storage module to deliver and receive storage bins through the opening 550 to and from the exterior 502. Figure 4 exemplarily illustrates the opening 550 (in the left drawing in Figure 4), and a storage bin 202 held by a vehicle 210 beyond an outer edge of the storage module 200 (in the right drawing in Figure 4), in order to deliver or retrieve the storage bin 202 in a vertical direction to a handover point. It will be understood that the depicted configuration is merely exemplary and that zones of contiguous storage areas may be provided across several adjacent storage modules, as needed.

In order to retrieve storage bins from the warehouse system of the present disclosure in general (i.e., no matter whether or not outer walls/openings are provided, as described above), rather than using bin lifts to convey storage bins in the vertical direction, storage bins may be conveyed beyond outer edges of the storage modules when the storage bins are to be delivered in the vertical direction to a handover point (where warehouse personnel may take corresponding goods from the bins for further processing). In one such variant, in order to retrieve a storage bin from one of the plurality of stacks of the plurality of storage modules, at least one vehicle (moving at the top level of a respective storage module) may, once the vehicle has retrieved the storage bin from the stack, be moved together with (i.e., "carrying") the storage bin along the top level of the respective storage module towards an edge of the storage module, where the vehicle may shift the storage bin beyond the edge of the storage module and lower the storage bin along the edge of the storage module to a handover point of the warehouse system. Depending on the orientation of the vehicle on the top level of the storage module, shifting the storage bin beyond the edge of the storage module may include rotating, using a rotating mechanism, and a gripper of the vehicle gripping the storage bin to a rotational position in which the gripper extends beyond the edge of the storage module.

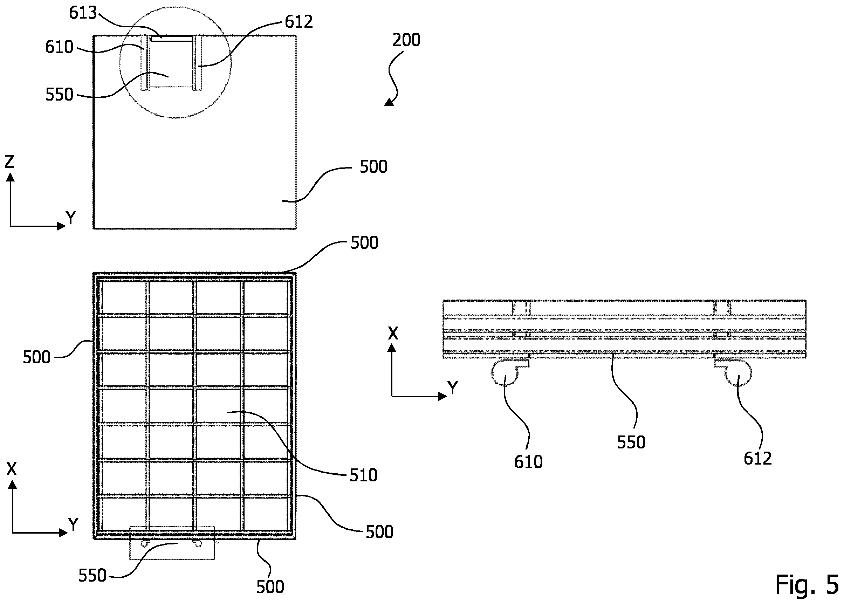

Furthermore, a thermal barrier configured to thermally close the opening can be provided with the storage module 200. Figure 5 exemplarily illustrates views of a storage module 200 with an opening 550 in a vertical outer wall and details of the opening 550. The upper drawing in Figure 5 illustrates a front view of the storage module 200 including the opening 550, the lower left drawing in Figure 5 illustrates a top view of the storage module 200, and the lower right drawing in Figure 5 illustrates a detail of the top view, particularly details of a thermal barrier 610, 612 configured to thermally close the opening 550.

With reference to Figures 4 and 5, the outer wall 500 thermally separates the storage area 204 from the exterior 502. This thermal separation is not available at the opening 550. Thus, a thermal barrier in form of at least one air curtain 610, 612 is arranged along an edge of the opening 550. Figure 5 exemplarily illustrates a pair of air curtains 610, 612 arranged opposite to one another and providing an air stream and directions facing each other. It is to be understood that the opening 550 may be provided with a thermal barrier in form of a single air curtain 610 or 612. Likewise, an air curtain could be arranged at an upper edge and/or a lower edge of the opening 550, so that the air curtain (not explicitly illustrated) is horizontally arranged and creates an air curtain top to bottom and/or bottom to top.

Figure 5 additionally illustrates an optional thermal barrier comprising a door 613 configured to selectively open and close the opening 550. As a mere example, the door 613 may be arranged at an upper edge of the opening 550 and can be configured to move downwards in a vertical direction (Z-axis) to close the opening 550 and to move upwards in the vertical direction to open the opening 550.

The door 613 can be a high-speed door, such as a high-speed roller shutter.

Irrespective of the type of thermal barrier, a storage bin 202 can be moved through the opening 550 to be moved into the storage area 204 or to be placed at the handover point. In case of an air curtain 610, 612 the vehicle 210 can simply move the storage bin 202 through the air stream of the air curtain 610, 612. In case of a door 613, the door 613 can be opened for the storage bin 202 to pass through the opening 550. Thereafter, i.e., when neither the storage bin 202 nor a portion of the vehicle 210 is in or reaching through the opening 550, the door 613 can be closed for thermal insulation. Figures 4 and 5 further illustrate an outer ceiling 510 arranged horizontally above the top level 206. Such optional outer ceiling 510 can further thermally insulate the temperature zone, such as the storage area. Since the opening 550 is arranged at the vertical wall 500, the temperature zone may include the top level 206.

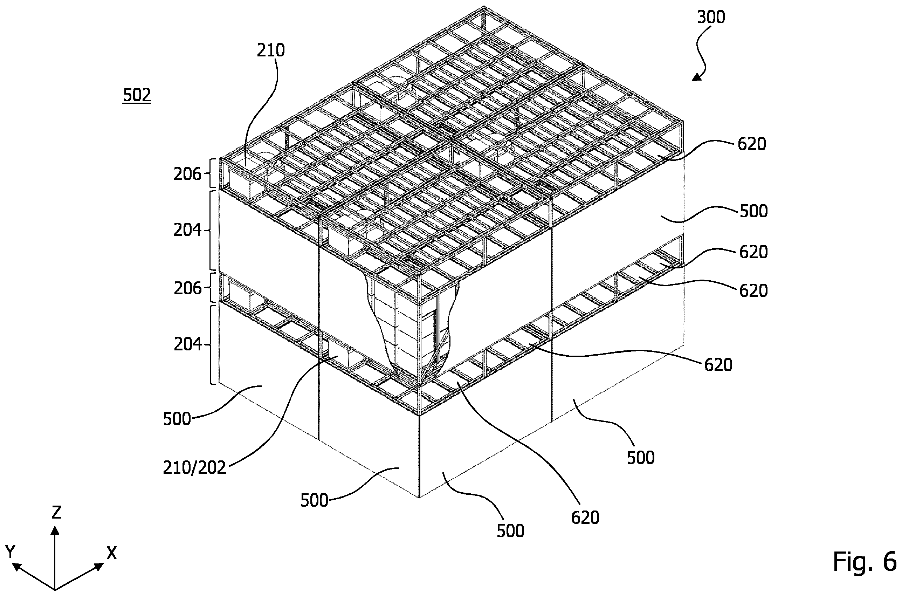

Figure 6 illustrates a perspective view of another exemplary warehouse system 300 comprising a plurality of interconnected storage modules 200 forming different temperature zones. As a mere example, a temperature zone may be formed at the lower level of storage modules 200 and another temperature zone may be formed at the upper level of the storage modules 200 (where a cut out is provided to illustrate the interior of one of the storage modules 200). Each of the storage modules 200 of the respective level comprises at least one outer wall 500 at the circumference of the warehouse system 300 covering the storage areas 204.

The top level 206 in this particular example is not covered or closed by an outer wall 500. This allows the vehicle 210 to reach the outer edge of the storage module 200 at each perimeter cell of the two-dimensional grid. Thus, a handover point can be arranged anywhere along the perimeter of the top level 206, which increases flexibility.

In order to better maintain the temperature in the storage area 204, i.e., in the temperature zone, a thermal barrier is provided that comprises at least one door 620 configured to run approximately horizontally between the storage area 204 and the top level 206 to selectively cover and uncover at least a portion of the storage area 204. Figure 6 has been provided with multiple reference signs 620 identifying a plurality of doors 620.

As a mere example, each line of grid cells may be covered and uncovered by a dedicated door 620, that for example runs along the transverse direction (Y axis). In other words, the at least one door 620 has a width corresponding to a first size (along the longitudinal direction, i.e., the X axis) of one of more of the plurality of stacks 208 of storage bins 202. It is to be understood that the moving direction of the door 620 can also be along the longitudinal direction (X axis).

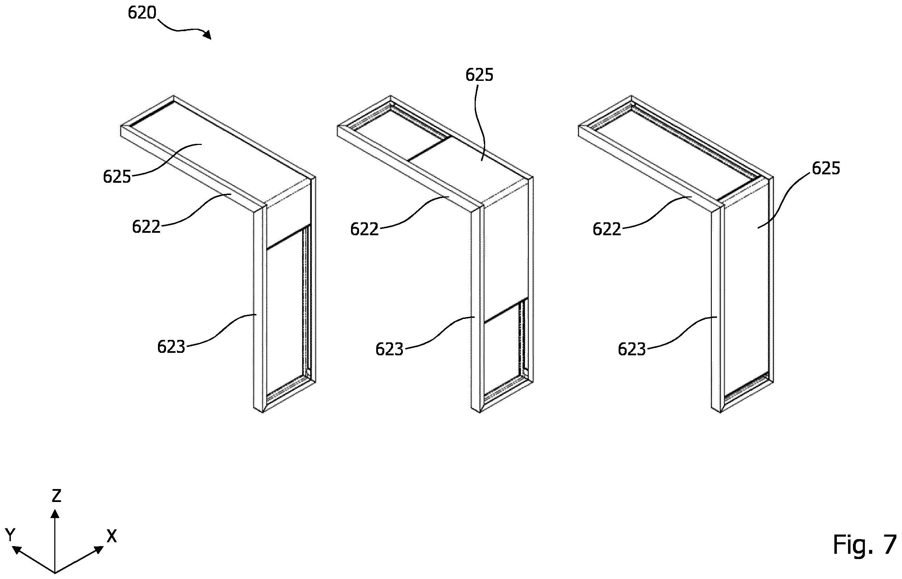

This configuration and further configurations of the door 620 will be explained with respect to Figures 7 to 11.

Figure 7 illustrates perspective views of an exemplary thermal barrier 620 in different opening degrees. The thermal barrier or door 620 has a horizontal frame 622 and a vertical frame 623, which is one exemplary configuration thereof. The horizontal frame 622 has or forms a rail guiding the door, particularly a shutter 625. The shutter 625 is flexible and can be bent, so that it can move along the horizontal frame 622 as well as along the vertical frame 623, which can likewise have a rail guiding the door or shutter 625. The shutter 625 is further thermally insulating, in order to form the thermal barrier. As a mere example, the shutter 625 can be a thermally insulating canvas, membrane or tarpaulin, which can easily be bent or rolled.

In the left drawing of Figure 7, the shutter 625 is in a closed position, i.e., covering the entire area of the horizontal frame 622. As a mere example, the horizontal frame 622 can span over the entire storage module 200. Thus, an operating length of the at least one door 620 corresponds to a second size of one or more of the plurality of stacks 208 of storage bins 202 (along the transverse direction, i.e., the Y axis).

Alternatively, the shutter 625 may have a different operating length and/or the horizontal frame 622 may have a different length covering only one or more of the stacks 208 of storage bins 202.

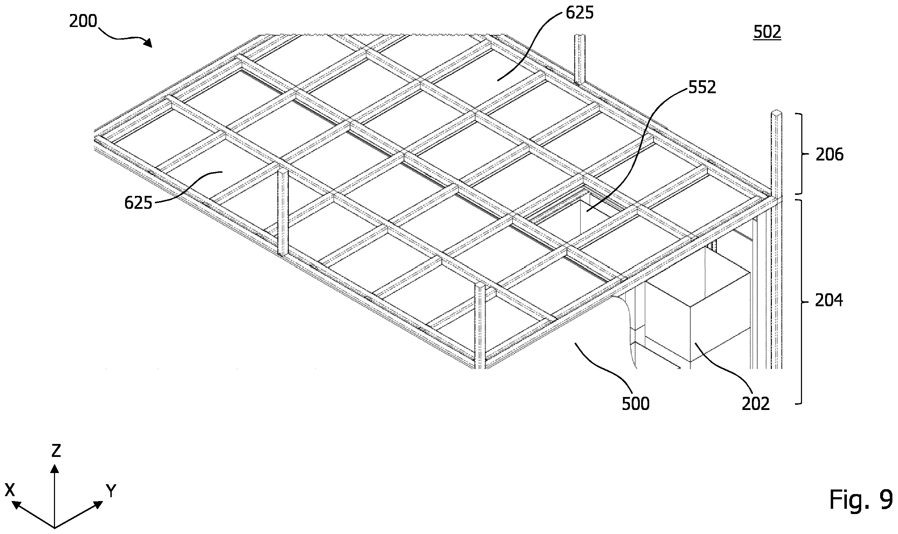

In the example illustrated in Figure 7, in the middle drawing a first opening degree of the shutter 625 is depicted. Such opening degree may create an opening 552 (Figure 9) sized in correspondence with one or more stacks 208 below. In the right drawing of Figure 7 a second opening degree of the shutter 625 is depicted, which may create an opening 552 sized in correspondence with two or more (or all) stacks 208 below.

In the exemplary door 620 of Figure 7, the shutter 625 bends at a corner of the horizontal and vertical frames 622, 623, so that the shutter 625 can be brought into a position corresponding to the vertical frame 623 when moving towards the open position (for any opening degree).

Alternatively, the vertical frame 623 can be omitted and a roller (not illustrated) at the right-hand end of the horizontal frame 622 in Figure 7 can be installed, on which the shutter 625 can be rolled (for opening the shutter 625) and unrolled (for closing the shutter 625).

The horizontal frame 622 and the vertical frame 623 can be mounted to the structure of the storage module 200, such as struts the storage module 200. This allows retrofitting a storage module 200 with a thermal barrier or door 620. Alternatively or additionally, at least parts of the horizontal frame 622 and the vertical frame 623 can be integrated into the structure of the storage module 200. As a mere example, a rail guiding the shutter 625 can be connected to or can be integrated into the structure of the storage module 200.

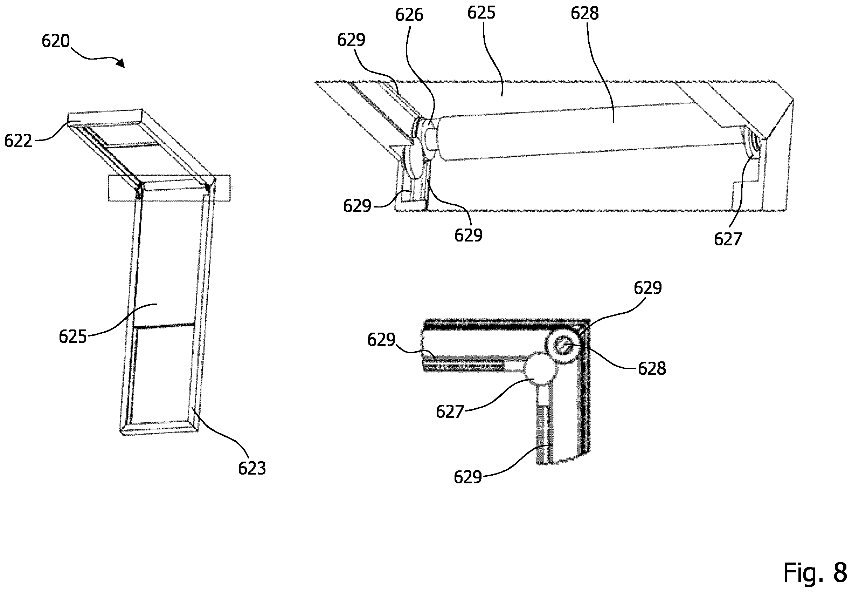

Figure 8 illustrates details of the thermal barrier 620 of Figure 7. Particularly, the corner between the horizontal and vertical frames 622, 623 are illustrated. For example, the at least one door 620 can comprise a rope or belt 629 that runs along the horizontal and/or vertical frames 622, 623. One or more pulleys 626, 627 can be provided that are configured to turn the rope or belt 629. For instance, the pulleys 626, 627 can guide the rope or belt 629 around the corner formed by the horizontal and vertical frames 622, 623, so that the rope or belt 629 can run unhindered along the horizontal and vertical frames 622, 623. The shutter 625 can be connected or coupled to the rope or belt 629, so that pulling the rope or belt 629 in one direction opens the shutter 625 and pulling the rope or belt 629 in the opposite direction closes the shutter 625. It is to be understood that further pulleys (not illustrated) may be provided, for example, at the free ends of the horizontal and vertical frames 622, 623.

The door can further comprise a motor 628, which is illustrated as a cylindrical component arranged at the corner between the horizontal and vertical frames 622, 623. Such motor 628 can not only drive the pulleys 626, 627 and/or the rope or belt 629, but can further support the shutter 625 at the corner between horizontal and vertical frames 622, 623. The motor 628 can additionally rotate where the portion of the shutter 625 contacts the motor 628, so that a smooth driving of the shutter 625 can be achieved.

The motor 628 can be configured to move the shutter 625 at a high speed, such as 200 to 800 mm/s, preferably 500 mm/s, so that the door 620 can be considered as a high-speed door or rapid action door or shutter.

The element 628 illustrated in Figure 8 can also be a hollow shaft through which a motor shaft extends (see cross-sectional view in Figure 8 comprising an inner shaft and outer hollow shaft). Thus, the outer shaft can form a drive axle or wheel for the respective door. The inner shaft can be driven by a motor (not explicitly illustrated), while the (outer) hollow shaft can be selectively coupled and decoupled with the motor, i.e., to the (inner) motor shaft, via a drive coupling or clutch (not illustrated).

The (inner) motor shaft can extend along the width of more than a one door. Thus, a single motor or can drive the motor shaft, while a plurality of doors can be moved by opening or closing the drive coupling or clutch.

Furthermore, the thermal barrier 620 may comprise one or more sensors (not illustrated) to detect the position of the shutter 625. Signals of such sensors can be used to control the motor 628 and/or the drive coupling (or clutch).

It is to be understood that, instead of a rope or belt, the shutter 625 may also be moved by a pushrod or similar pushing component (not explicitly illustrated). As a mere example, a bi-stable component can be used that achieves a stable equilibrium position when being straight, in order to push the shutter 625, but is bendable around the motor or shaft 628. Such bi-stable component is known, for example, from metal tape measures.

Figure 9 illustrates a cut out of a perspective view of a storage module 200 with multiple thermal barriers 620, such as the thermal barriers 620 of Figure 7. As a mere example, the storage module 200 comprises four stacks 208 of storage bins 202 in the transverse direction (Y axis) and seven stacks 208 of storage bins 202 in the longitudinal direction (X axis). Each of the illustrated and only exemplary thermal barriers 620 has a width corresponding to the size of one stack 208 in the longitudinal direction (X axis). An operating length of each thermal barrier 620, particularly of the shutter 625, corresponds to a size of two stacks 208. Thus, a thermal barrier 620 is arranged on each side of the storage module 200, each of which is configured to close or cover a portion of the storage area 204 corresponding to the two stacks 208.

In Figure 9, one opening 552 is illustrated that is achieved by operating the corresponding shutter 625 and moving it to a first opening degree (e.g., Figure 7), so that only one stack 208 is uncovered. The remaining area of the storage area 204 is still covered by the thermal barrier 620 of the remaining doors 620, which facilitates maintaining the temperature in the temperature zone, i.e., the storage area 204. A vehicle (not illustrated in Figure 9) can drive to the opening 552 and place or retrieve a storage bin 202 into/from the stack 208 underneath the opening 552.

The two shutters 625 closing a complete row of stacks 208 (viewed along the transverse direction (Y axis)) can meet in the middle of the storage module 200. This is only one possible example. For instance, each shutter 625 can be configured to cover one or more or all stacks 208. This allows, for example, uncovering the opening 552 by the shutter 625 illustrated to the upper right in Figure 9, but to cover (close) the opening 552 by the shutter 625 illustrated to the lower left in Figure 9. This allows an independent opening and closing of openings 552 of any size and with an optimised speed (e.g., if it is known in advance that another opening 552 has to be formed (opened) to the upper right in Figure 9, where the upper right shutter 625 requires an operating length of only one length of a stack 208). In this case, the horizontal frames 622 of both doors 620 may be continuous and are not provided with a cross frame portion as illustrated, for example, in Figures 7 and 8.

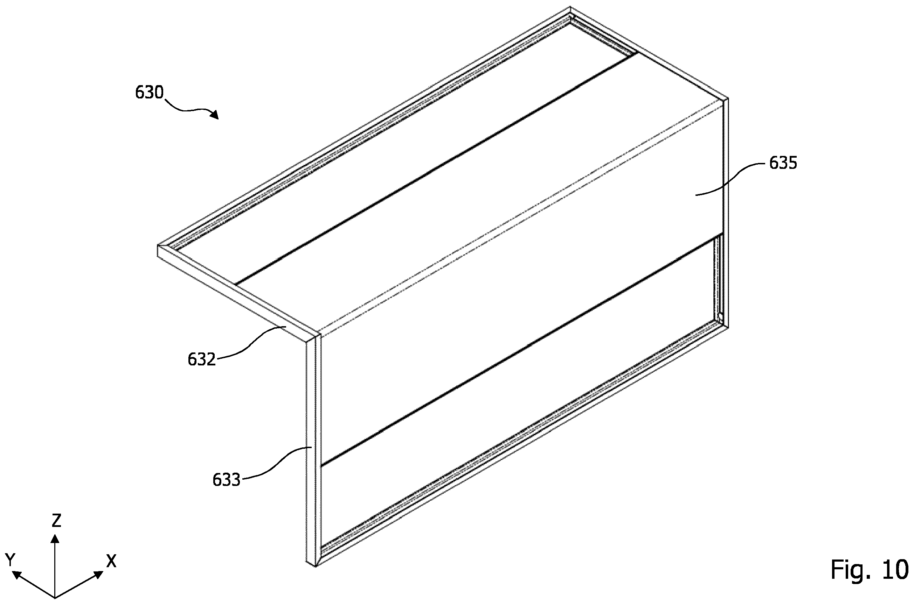

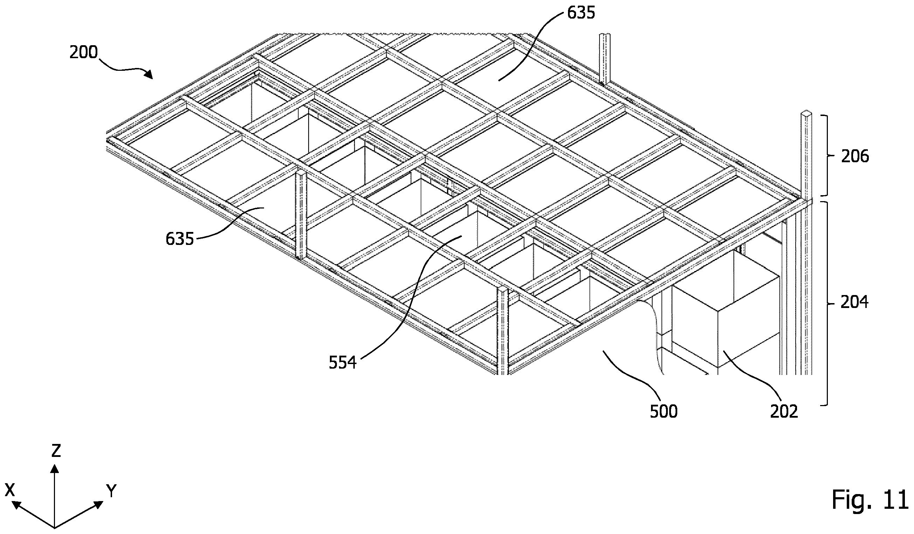

Figures 10 and 11 illustrate a perspective view and a cut out view of another exemplary thermal barrier 630. The thermal barrier 630 is quite similar to the thermal barrier 620 of Figures 7 and 8. Thus, corresponding or similar elements have been provided with reference signs associated with the corresponding element of Figures 7 and 8 with a value plus 10. As a mere example, the thermal barrier 630 comprises a horizontal frame 632 and a vertical frame 633 corresponding to horizontal frame 622 and vertical frame 623. The description of such corresponding elements will be omitted in order to avoid unnecessary repetitions, and the following description focuses on the differences to thermal barriers 620.

The thermal barrier 630 further comprises a shutter 635 having a width corresponding to a first size of multiple or all of the plurality of stacks 208 of storage bins 202. With respect to Figure 11, the storage area 204 is covered by two thermal barriers 630 (one to the upper right and one to the lower left side of Figure 11). The lower left thermal barrier or door 630 is illustrated in a configuration where the shutter 635 has been brought to an open position corresponding to the size of one stack 208. Since the width of the shutter 635 corresponds to a size of the storage module 200 along the longitudinal direction (X axis), an opening 554 is formed (uncovered) having a size corresponding to the entire row of stacks 208. Such thermal barrier 630 requires less components and, hence, is easier and more cost-effective to install. The larger opening 554 may be acceptable, if the storage area 204 is cooled, as the cold air will sink into the storage area 204 and will less likely be released from the storage area 204.

Driving the shutter 635 can be achieved in a manner corresponding to that of the shutter 625 and described with respect to Figures 7 to 9.

It is to be understood that the thermal barriers 620 and 630 may be sized in the transverse and longitudinal direction (Y and X axes) of the storage module 200 in any desired manner, and that any number of thermal barriers 620, 630 can be installed to cover the storage area 204. It will further be understood that present disclosure is not limited to the exemplary thermal barriers 620, 630 illustrated and explained with respect to Figures 7 to 11.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A warehouse storage module (200), comprising:
a storage area (204) adapted to accommodate a plurality of stacks (208) of storage bins (202) arranged in a horizontal two-dimensional grid at a bottom of the storage module (200);
a top level (206) arranged above the storage area (204) and configured to accommodate at least one vehicle (210) movable in alignment with the two-dimensional grid to retrieve and place storage bins (202) from and to the plurality of stacks (208);
outer walls (500, 510) enclosing at least partially the storage area (204) and forming a temperature zone that is delimited from the exterior (502);
an opening (550, 552, 554) to enable retrieval and placement of storage bins (202) from and to the plurality of stacks (208) by the at least one vehicle (210); and
a thermal barrier (610, 612, 613, 620, 630) configured to thermally close the opening (550, 552, 554).

2. The warehouse storage module of claim 1, wherein the outer walls comprise an outer ceiling (510) arranged horizontally above the top level (206), wherein the temperature zone includes the top level (206).

3. The warehouse storage module of claim 1 or 2, wherein the opening (550) is provided in a vertical outer wall (500) at an edge of the storage module (200), where the at least one vehicle (210) reaches a handover point of the warehouse storage module (200), the handover point being located outside of the storage area.

4. The warehouse storage module of claim 3, wherein the thermal barrier comprises at least one air curtain (610, 612) arranged along an edge of the opening (550) and configured to generate an air curtain thermally closing the opening (550), and/or
wherein the thermal barrier comprises a door (613) configured to selectively open and close the opening (550).

5. The warehouse storage module of claim 1, wherein the thermal barrier comprises at least one door (620, 630) configured to run approximately horizontally between the storage area (204) and the top level (206) to selectively cover and uncover the storage area (204).

6. The warehouse storage module of claim 5, wherein the at least one door (620) has a width corresponding to a first size of one or more of the plurality of stacks (208) of storage bins (202), and/or
wherein the at least one door (620, 630) has an operating length corresponding to a second size of one or more of the plurality of stacks (208) of storage bins (202).

7. The warehouse storage module of claim 5 or 6, wherein the at least one door (620, 630) comprises a horizontal frame (622, 632) including a rail guiding the door (620, 630), and/or
wherein the at least one door (620, 630) comprises a vertical frame (623, 633) including a rail guiding the door (620, 630),
wherein, preferably, the horizontal frame (622, 632) and/or the vertical frame (623, 633) is mounted to a structure forming the storage area (204) and/or the top level (206).

8. The warehouse storage module of one of claims 5 to 7, wherein the at least one door (620, 630) comprises a rope or belt (629), and one or more pulleys (626, 627) configured to turn the rope or belt (629) and/or a motor (628) driving the rope or belt (629).

9. The warehouse storage module of claim 8, wherein the motor (628) is configured to drive one or more of the at least one door (620, 630), and wherein, preferably, a drive coupling can selectively couple and decouple the motor (628) from a respective drive axle or wheel of the one or more doors (620, 630).

10. The warehouse storage module of one of claims 5 to 9, wherein the thermal barrier comprises at least one further door (620, 630) configured to run approximately horizontally between the storage area (204) and the top level (206) to selectively cover and uncover the storage area (204), wherein the at least one further door (620, 630) is arranged opposite to the at least one door (620, 630) and is configured to close the opening (550, 552, 554) in coaction with one of the at least one door (620, 630).

11. A warehouse system (300) comprising a plurality of storage modules (200) of one of claims 1 to 10 in an individual room, wherein the plurality of storage modules (200) is interconnected with one another and arranged in at least two levels.

12. The warehouse system (300) of claim 11, wherein the outer walls (500, 510) of at least a portion of the plurality of interconnected storage modules (200) form a zone of contiguous storage areas (204) that is closed from the exterior (502), and/or
wherein the outer walls (500, 510) of the plurality of interconnected storage modules (200) are provided to form a plurality of zones of contiguous storage areas (204) in the warehouse system (300), wherein each zone is closed from the exterior (502) and other zones of contiguous storage areas (204), wherein each of the plurality of zones forms a different temperature zone.

13. The warehouse system (300) of claim 11 or 12, wherein, for each of the plurality of storage modules (200), a height of the storage module (200) is dimensioned to allow a maximum number of 6, preferably 5, 4 or 3, storage bins (202) per stack (208) of the plurality of stacks (208) of the storage module (200), and/or
wherein the plurality of storage modules (200) comprises at least 3, preferably at least 4 or at least 5, levels of storage modules (200) placed one above the other in the individual room, and/or
wherein the plurality of interconnected storage modules (200) further comprises at least two storage modules (200) placed one next to the other in a horizontal direction in the individual room.

14. The warehouse system (300) of one of claims 11 to 13, wherein each of the plurality of storage modules (200) is dimensioned to accommodate a maximum of 500, preferably 400, 300, 200 or 100, storage bins (202) in the plurality of stacks (208) of the storage module (200).

15. The warehouse system (300) of one of claims 11 to 14, wherein each of the plurality of storage modules (200) is a prefabricated interconnectable storage module (200), wherein the warehouse system (300) is assembled from the plurality of storage modules (200) in the manner of a modular construction system.
